# EUROPEAN PATENT SPECIFICATION

(11) **EP 0 691 719 B1**
(45) Date of publication and mention of the grant of the patent: **18.06.1997**
(21) Application number: 94110479.6
(22) Date of filing: 06.07.1994
(51) Int. Cl.: H02G 7/06, H02G 7/12

(54) **Overhead transmission cable**
Übertragungs-Freileitungskabel
Câble de transmission aérien

(43) Date of publication of application: 10.01.1996
(73) Proprietor: SUMITOMO ELECTRIC INDUSTRIES, LTD., Osaka (JP)
(72) Inventor: Ikeda, Toshiya, c/o Osaka Works, Kono hana-ku, Osaka (JP); Sawada, Kazuo, c/o Osaka Works, Kono hana-ku, Osaka (JP); Miyazaki, Kenji, c/o Osaka Works, Kono hana-ku, Osaka (JP); Okumura, Tetsuo, c/o Osaka Works, Kono hana-ku, Osaka (JP); Fujii, Kazuyuki, c/o Osaka Works, Kono hana-ku, Osaka (JP); Kimura, Yuji, c/o Osaka Works, Kono hana-ku, Osaka (JP); Kurimoto, Katsuya, c/o Osaka Works, Kono hana-ku, Osaka (JP); Nagatomi, Kazuhiko c/o Tokyo Office, 1-chome, Minato-ku, Tokyo (JP); Kikuta, Takatoshi, c/o Tokyo Office, 1-chome, Minato-ku, Tokyo (JP)
(74) Representative: Schieschke, Klaus, Dipl.-Ing.

(56) References cited:
- EP-A- 0 165 828
- CA-A- 1 199 381
- DE-A- 2 129 843
- DE-A- 3 315 473
- FR-A- 626 262
- FR-A- 2 225 861

## Description

This invention relates to an overhead transmission cable having a higher current-carrying capacity and a lower sag.

Conventional overhead transmission cables are formed of aluminum conductor steel reinforced (ACSR) or an aluminum alloy strand. ACSR comprises a steel strand and an aluminum alloy strand twisted together. A single aluminum alloy strand consists of twisted aluminum alloy wires. Since the single aluminum alloy strand is too low in strength, it is reinforced with a steel strand that forms the cable core, for use as an overhead cable. This reinforced cable is what is called ACSR. On the other hand, the single aluminum alloy strand has an increased strength by alloying aluminum, for use as an overhead cable.

With an increasing power consumption and growing concern about the environment, demand for overhead transmission cables having a higher capacity and a lower sag is growing these days. In order to answer this demand, trials have been made to (1) increase the size of ACSR, (2) form ACSR from an aluminum alloy, and (3) develop a new type of ACSR.

But none of these methods can meet both the demand for higher capacity and the demand for low sag.

Namely, with the method (1), it is possible to increase the capacity of the cable because a large-sized ACSR has a large conductor sectional area. But such a cable is heavier, so that it is more likely to increase sag. In order to reduce the sag of the cable, it has to pulled with a stronger force. Thus, large steel towers are needed.

If only the current-carrying capacity is increased without increasing the cable size, the cable temperature will rise to such an extent that the aluminum softens and the cable cannot be suspended in air any more. The method (2) is free of this problem because in this method, an aluminum alloy containing Zr which is more heat-resistant than aluminum, is used instead of aluminum. But since an aluminum alloy has a high linear expansion coefficient, the linear expansion coefficient of the entire cable formed by the method (2) is rather high. Such a cable tends to sag markedly when the temperature rises.

In the method (3), the cable is formed from a new type of ACSR such as ACIR or a gapped ACSR to reduce its linear expansion coefficient. ACIR is a kind of ACSR which uses a strand of an Fe-Ni alloy, which has a lower linear expansion coefficient than steel strands. The gapped ACSR has gaps between the steel strand core and the surrounding aluminum strands, so that the linear expansion coefficient of the cable is equal to that of the steel strand. But even such new ACSR's tend to increase the sag with temperature rise of the cable.

An improved transmission cable is known from FR-A-2 225 861, which comprises a tension member given a tension for supporting the conductor means in the air, and a connecting means for connecting the conductor means with the tension member so that they are spaced apart from and extend in parallel to each other. It is an object of this invention to provide an overhead transmission cable according to the last mentioned state of the art which has a higher current-carrying capacity and a lower sag without an increase in weight.

The invention achieves this object with the combination of the features of claim 1.

In order to minimize the decrease in strength due to heat generation of the conductor resulting from the increase in current-carrying capacity, an Al alloy having a high heat resistance is used, preferably an alloy containing Zr. However, with an increasing content of Zr or other added element the conductivity of the Al alloy is lowered and the transmission loss is increased. Thus, the conductivity should be not less than 50 %.

Further, in order to provide a sufficient strength for use even at an abnormally high temperature which may occur in case of a fire under the transmission cable, wires of Fe or Fe alloy may be twisted or braided together with the conductor.

The tension member may be made of iron, titanium, aluminum or an alloy whose main component is one of these metals or may be formed of organic fiber or yarn made of Aramid, polyethylene, polyoxymethylene, polyarylate, rayon. Otherwise, it may be formed by twisting or braiding at least one composite of at least one of an organic material and an inorganic material and at least one of a metal and a resin.

The organic material used in the composite tension member is preferably fiber or yarn made of Aramid, polyethylene, polyoxymethylene, polyarylate or rayon, and the inorganic material is preferably carbon fiber, silicon carbide fiber, alumina fiber or glass fiber.

A tension member made of Al, Al alloy, Ti or Ti alloy is preferable to a tension member made of Fe or Fe alloy in that the former is less likely to sag when suspended in the air. But since Al or Al alloy is low in strength, such a material should be used not alone but in the form of a composite with another material having higher strength.

Organic fibers or yarns should be formed into a tension member by twisting or braiding them. Use of such an organic material contributes to further reduction in weight of the tension member. But if the organic material is exposed to the air, it can be damaged. Thus, for protection purposes, an organic material should be used in the form of a composite with a resin or a metal.

Inorganic fibers are brittle and thus can be bent and damaged if twisted or braided. Thus, use of such fibers alone is not desirable as a material of an overhead transmission cable, which is exposed to the air for a long period of time and has to have sufficient durability. Inorganic fibers, too, should be used in the form of a composite with a resin or a metal to cover up their brittleness.

Resins suitable for use in forming such a composite material with inorganic or organic materials include thermosetting resins such as epoxy, polyester, phenol, polyimide and bismaleimide, and thermoplastic resins such as polyethylene and polyphenylene sulfide. Since organic fiber, yarn and resin are prone to ultraviolet degradation, they are preferably covered with a light-shielding layer. Such a light-shielding layer may be formed by winding a wire or tape of a light metal (such as Al) or covering with a braid of metal filaments. Otherwise, such a layer may be a plating or polyethylene containing carbon or may be in any other form.

The tension member may contain an optical fiber. The optical fiber may have communicating function or function of detecting deterioration or breakage.

The conductor is preferably made of Al, Cu or an alloy containing Al or Cu as a main component. Cu and Cu alloy have a conductivity about 1.7 times that of Al and Al alloy. But their specific gravity is about 3.3 times that of Al and Al alloy. In other words, the ratio of the weight to the conductivity of Cu or Cu alloy is about 1.9 times that of Al or Al alloy. Thus, a conductor made of Cu or Cu alloy tends to sag more remarkably than a conductor made of Al or Al alloy. But since Cu or Cu alloy is low in electrical resistance, it is possible to form low-loss cables out of Cu or Cu alloy.

The connecting member may be connected fixedly or unfixedly to the tension member and the conductor. Its shape and mounting position are not limited but it should be made of a material as light as possible to minimize the increase in weight. If the tension member is not an insulator, the transmission loss would be large. To avoid this, the tension member and the conductor should be insulated from the connecting member.

Also, in order to prevent the cable from rotating under strong winds, it may be made up of more than one such tension member and more than one such conductor.

Since the conductor and the tension member are not in contact with each other, the heat generated in the conductor is scarcely conducted to the tension member. Thus, even if the conductor is heated up to a high temperature, there is little increase in the sag because no elongation of the tension member due to heat rise occurs. This makes it possible to increase the current-carrying capacity of the cable with the sectional area as it is.

Because it is possible to increase the current-carrying capacity of the conductor without increasing its sectional area and because it is possible to use a lighter tension member (with the tension member made of Fe or Fe alloy, no change in weight is expected), it is possible to reduce the weight of the entire cable. Since the cable is lighter in weight, there is no need to pull it with so strong a force. Thus, no big stress acts on the steel towers, so that they can be kept in a serviceable state semi-permanently.

The tension member made of an organic material is especially lightweight. The one made of a composite of an organic or inorganic material and a resin is the second most lightweight. Since in the present invention heat is not conducted from the conductor to the tension member, it has become possible to use a tension member made of an organic material and/or resin.

According to the present invention, the heat generated in the conductor is scarcely conducted to the tension member. Thus, it is possible to increase the current-carrying capacity of the cable without increasing the sectional area of the conductor and thus without increasing the possibility of sag of the cable. Thus, when replacing on existing cable with the cable of the present invention, there is no need to rebuild or reinforce the existing cable supporting towers.

Other features and objects of the present invention will become apparent from the following description made with reference to the accompanying drawings, in which:
Fig. 1A is a sectional view of a first embodiment;
Fig. 1B is a side view of the same;
Fig. 2A is a sectional view of a second embodiment;
Fig. 2B is a side view of the same;
Fig. 2C is an enlarged side view of a connecting portion of the same;
Fig. 3A is a sectional view of a variant of the second embodiment;
Fig. 3B is a side view of the same;
Fig. 3C is an enlarged side view of a connecting portion of the same;
Fig. 4 is a sectional view of a third embodiment;
Fig. 5 is a sectional view of a variant of the third embodiment;
Fig. 6 is a sectional view of a fourth embodiment;
Fig. 7 is a graph showing the relation between the temperature of the cable hung between the cable supporting structures and the degree of sag;
Fig. 8 is a sectional view of a fifth embodiment; and
Fig. 9 is a sectional view of a sixth embodiment.

We will now describe several embodiments of the present invention with reference to the accompanying drawings.

In any of the drawings, numeral 1 designates a tension member and 2 does a conductor. They are connected together by means of a connecting member 3 so as to be spaced apart from and extend in parallel to each other.

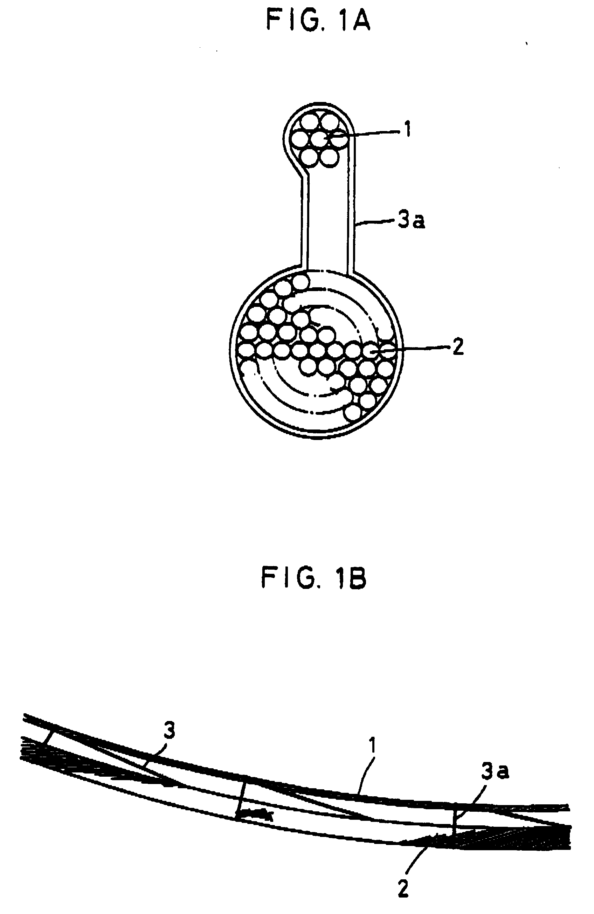

The tension member 1 of the overhead transmission cable (Article 1) shown in Fig. 1 is a steel strand, while the conductor 2 is an aluminum strand. The connecting member 3 is made of a ferro-alloy covered with polyethylene rubber and has hook portions 3a arranged at a predetermined pitch and unfixedly attached to both the tension member 1 and the conductor 2. In order to keep a predetermined distance between the adjacent hook portions 3a, they are connected together as a one-piece member.

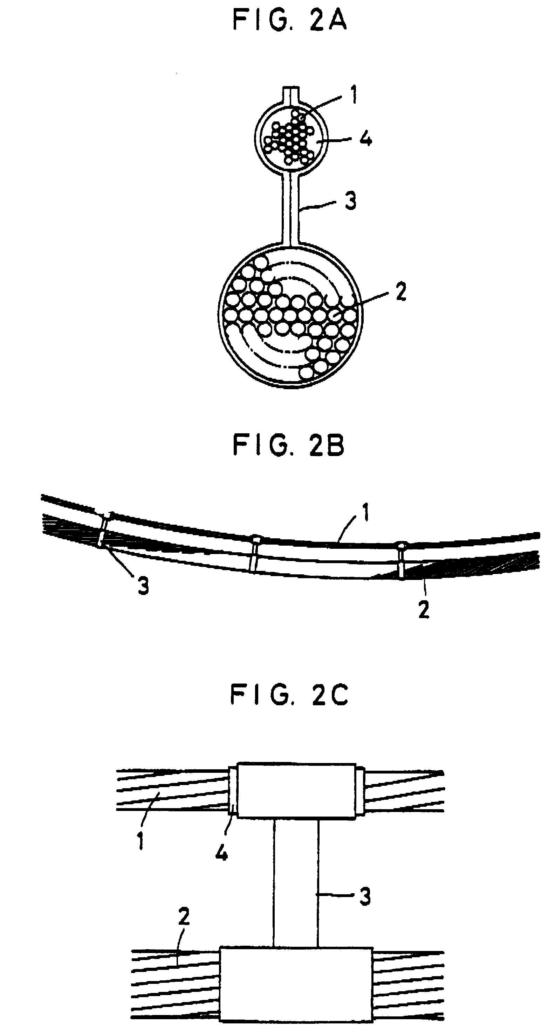

The overhead transmission cable shown in Fig. 2 (Article 2) uses as the tension member 1 a braided rope made of polyarylate (made by KURARE; trade name VECTRAN), while the conductor 2 is a strand of an aluminum alloy. They are connected together by a plurality of connecting members 3 made of an aluminum alloy. The connecting members 3 are secured to the tension member 1 through bushings 4 of silicone rubber and unfixedly coupled to the conductor 2 to suspend the conductor from the tension member.

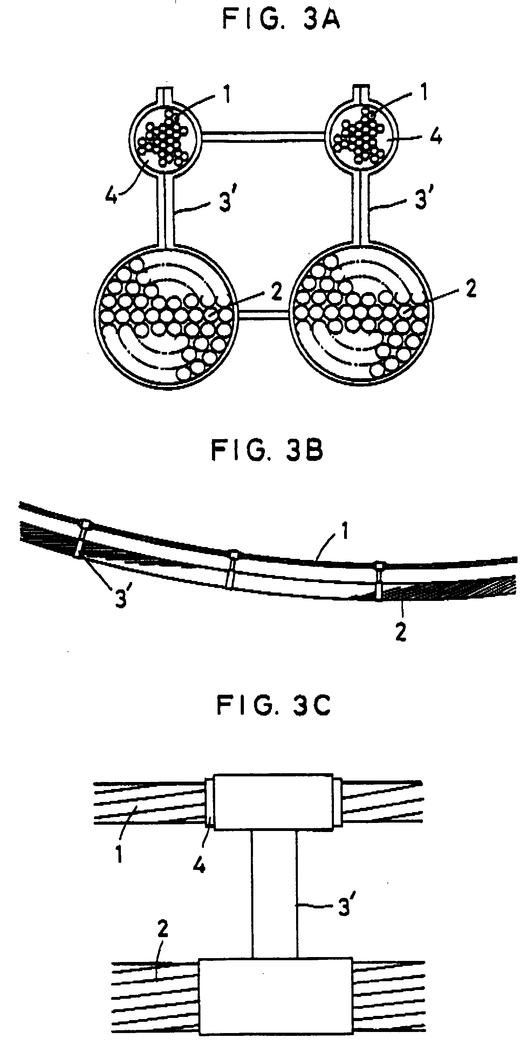

The overhead transmission cable shown in Fig. 3 (Article 2') comprises two each conductors and tension members of the same types as the conductors and the tension member of Article 2. The conductors are connected to the respective tension members through aluminum connecting members 3'. Similar to Article 2, a silicon rubber bushing is interposed between each tension member and connecting member. A wind tunnel test revealed that Article 2' was more resistant to cable rotating forces produced by strong winds than Article 2.

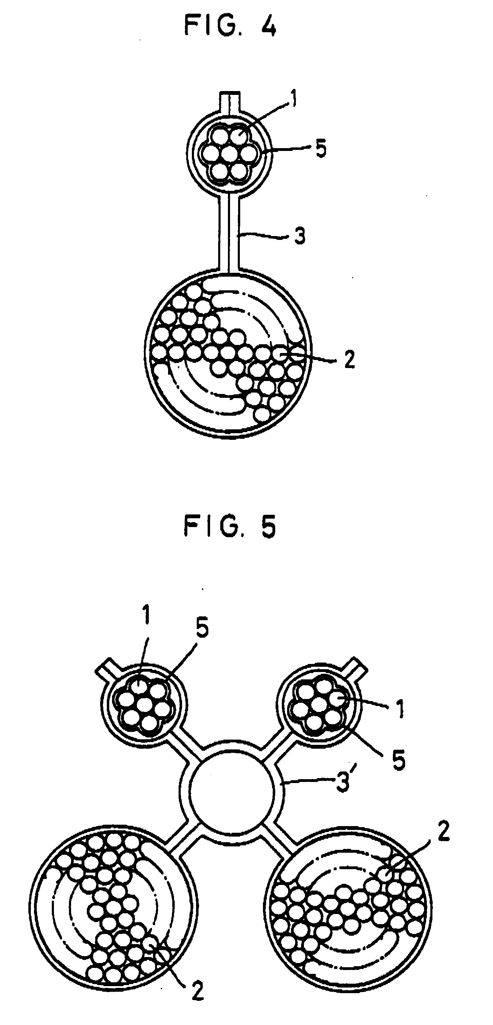

The overhead transmission cable shown in Fig. 4 (Article 3) is the same as Article 2 except that the tension member 1 is a rope made of a composite of Aramid fibers (made by Dupont; trade name Kevlar) and an epoxy resin and having its surface covered with an aluminum filament braided layer 5 for shielding light.

We also prepared another overhead transmission cable (Article 4) which differs from Article 3 only in that the tension member was made of a composite of aluminum and silicon carbide fiber (made by Japan Carbon; trade name NICARON).

The overhead transmission cable shown in Fig. 5 (Article 3') comprises two each conductors and tension members of the same types as the conductor and the tension member of Article 3. The conductors are connected to the respective tension members through aluminum connecting members 3'. A wind tunnel test revealed that Article 3' was more resistant to cable rotating force produced by strong winds than Article 3.

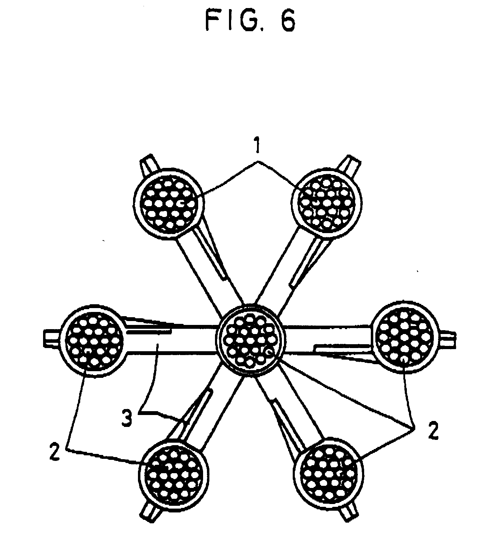

The overhead transmission cable shown in Fig. 6 (Article 5) comprises two parallel ropes or tension members 1 made of a composite of carbon fiber (made by Toray; trade name TORECA) and bismaleimide and having its surface coated with a silicone resin, and five conductors 2 braided of heat-resistant aluminum alloy and suspended from the tension members 1 by means of connecting members 3 made of FRP. The connecting members 3 are fixed to both the tension members 1 and the conductors 2 through silicone rubber sheets.

We also prepared an overhead transmission cable (Article 6) which differs from Article 3 only in that the tension member was a rope made of composite of carbon fiber (made by Toray; trade name TORECA) and aluminum.

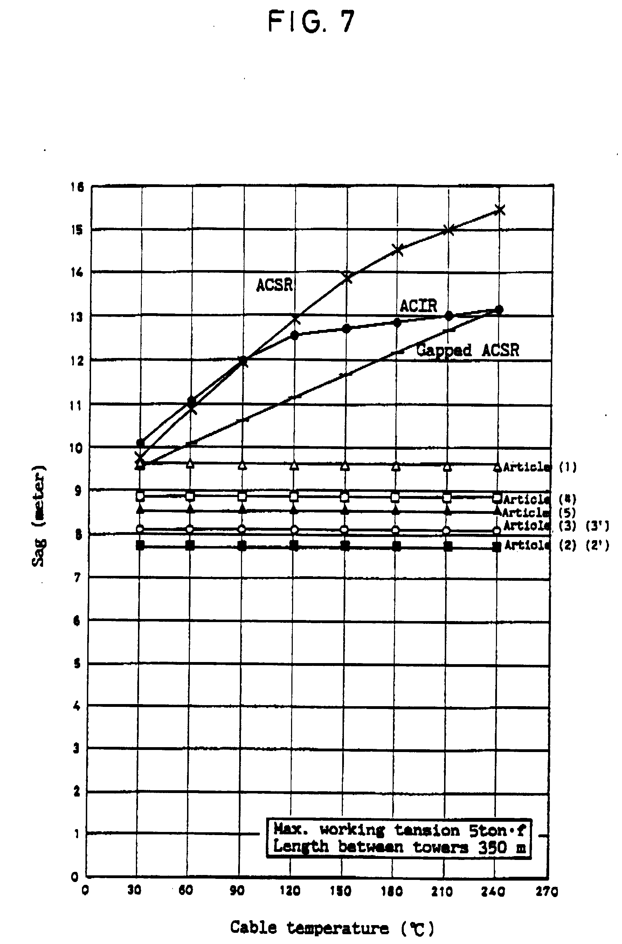

ACSR cables with a sectional area of 410 mm² and Articles 1-5 having conductors with an equivalent sectional area were actually hung between towers spaced apart 350 meters from each other with the tension of 5 ton f applied to the cables. Fig. 7 shows the relation between the degree of sag of the cables and the cable temperature. Its abscissa represents the temperature of the conductor for ACSR. As for the Articles according to this invention, since no temperature rise was observed for the tension members, we measured the temperature of the conductors. The current-carrying capacity was about 800A at 90°C and 1600A at 210°C.

As will be apparent from Fig. 7, the overhead transmission cables according to the present invention make it possible to increase the current-carrying capacity without any increase in the degree of sag.

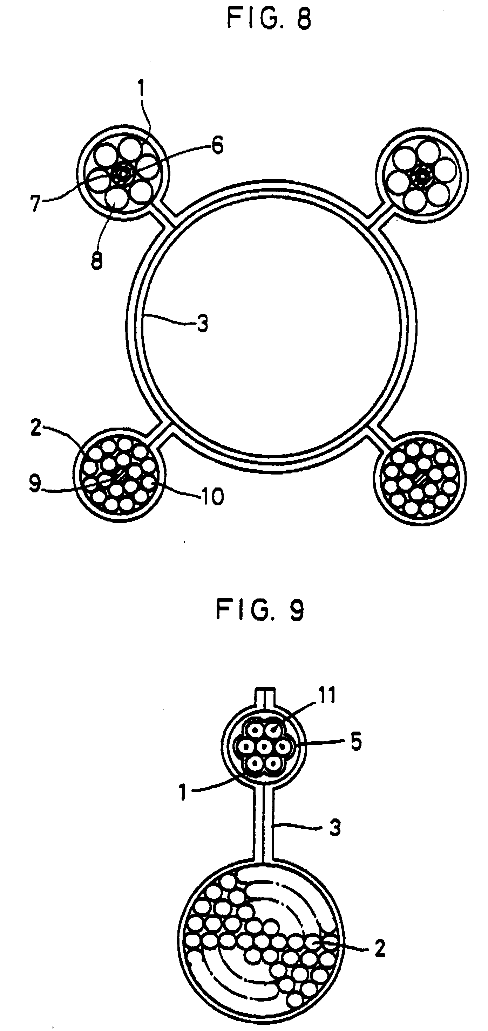

The overhead transmission cable shown in Fig. 8 has tension members 1 each comprising a steel pipe 6 that accommodates a six-cored optical fiber 7, and a plurality of surrounding wires 8 made of a composite of carbon fiber (made by Toray: trade name TORECA) and bismaleimide and extending parallel to one another and to the steel pipe 6. Each tension member 1 is further covered with polyethylene rubber. The conductors 2 each comprise a steel wire 9 as a core and a plurality of aluminum wires 10 twisted around the steel wire 9. The connecting member 3 is made of FRP. Five of the six cores forming the optical fiber 7 are used as communication lines. The other one is used for damage and rupture diagnosis. The steel pipes of the tension member 1 and the steel wires of the conductors 2 impart the cable a strength at least enough to keep the cable hanging even if heated by a fire that may occur under the cable.

The cable shown in Fig. 9 differs from that of Fig. 4 in that the tension member has optical fibers 11 for damage and rupture detection.

## Claims

1. An overhead transmission cable comprising conductor means (2), a tension member (1) given a tension for supporting said conductor means (2) in the air, and a connecting means (3, 3') for connecting said conductor means (2) with said tension member (1) so that they are spaced apart from and extend in parallel to each other, characterized in that said conductor means (2) is formed by twisting or braiding wires made of an aluminum alloy that shows a high heat resistance and that has an electrical conductivity not less than 50 %.

2. An overhead transmission cable as claimed in claim 1, wherein the conductor means (2) comprises wires of Fe or an Fe alloy twisted or braided with wires of the aluminum alloy.

3. An overhead transmission cable as claimed in claim 1 or 2 wherein said tension member (1) is formed by twisting or braiding wires made of at least one selected from the group consisting of iron, titanium, aluminum and their alloy.

4. An overhead transmission cable as claimed in one of the aforementioned claims wherein said tension member (1) is formed by twisting or braiding organic fibers or yarns made of at least one selected from the group consisting of Aramid, polyethylene, polyoxymethylene, polyarylate and rayon.

5. An overhead transmission cable as claimed in one of the aforementioned claims wherein said tension member (1) is formed by twisting or braiding wires made of a composite of at least one of an organic material and an inorganic material, said inorganic material including carbon fiber, silicon carbide fiber, alumina fiber and glass fiber, and at least one of a metal and a resin.

6. An overhead transmission cable as claimed in claim 1 wherein said tension member (1) comprises an optical fiber (7) to impart the cable communications and/or rapture detection function.

7. An overhead transmission cable as claimed in one of the aforementioned claims wherein said tension member (1) and said conductor means (2) are electrically insulated from each other by said connecting member (3, 3').

8. An overhead transmission cable as claimed in one of the aforementioned claims wherein said cable comprises more than one tension member (1) and more than one conductor means (2).

## Patentansprüche

1. Übertragungs-Freileitungskabel, bestehend aus Leitermitteln (2), einem Zugelement (1), auf welches ein Zug ausgeübt wird, um die Leitermittel (2) in der Luft zu tragen, und Verbindungsmitteln (3, 3'), um die Leitermittel (2) so mit dem Zugelement (1) zu verbinden, dass sie voneinander beabstandet angeordnet sind und sich parallel zueinander erstrecken, dadurch gekennzeichnet, dass die Leitermittel (2) durch Verdrehen oder Flechten von Drähten gebildet wird, die aus einer Aluminiumlegierung bestehen, welche eine hohe Wärmebeständigkeit und eine elektrische Leitfähigkeit von nicht weniger als 50% hat.

2. Übertragungs-Freileitungskabel nach Anspruch 1, bei dem die Leitermittel (2) Drähte aus Fe oder einer Fe-Legierung aufweisen, welche mit Drähten aus der Aluminiumlegierung verdreht oder verflochten sind.

3. Übertragungs-Freileitungskabel nach Anspruch 1 oder 2, bei dem das Zugelement (1) durch Verdrehen oder Flechten von Drähten gebildet wird, welche aus mindestens einem Element aus der Gruppe Eisen, Titan, Aluminium und deren Legierung bestehen.

4. Übertragungs-Freileitungskabel nach einem der vorhergehenden Ansprüche, bei dem das Zugelement (1) durch Verdrehen oder Flechten von organischen Fasern oder Garnen gebildet wird, die aus mindestens einem Stoff aus der Gruppe Aramid, Polyethylen, Polyoxymethylen, Polyarylat und Reyon bestehen.

5. Übertragungs-Freileitungskabel nach einem der vorhergehenden Ansprüche, bei dem das Zugelement (1) durch Verdrehen oder Flechten von Drähten gebildet wird, welche aus einem Verbundwerkstoff bestehen, der sich aus mindestens einem Metall oder einem Harz und aus mindestens einem organischen oder anorganischen Werkstoff zusammensetzt, wobei zum anorganischen Werkstoff Kohlenstofffasern, Siliciumcarbidfasern, Aluminiumoxidfasern und Glasfasern zählen.

6. Übertragungs-Freileitungskabel nach Anspruch 1, bei dem das Zugelement (1) eine optische Faser (7) aufweist, um die Funktionen der Kabelkommunikation und/oder der Feststellung von Brüchen zu ermöglichen.

7. Übertragungs-Freileitungskabel nach einem der vorhergehenden Ansprüche, bei dem das Zugelement (1) und die Leitermittel (2) durch die Verbindungsmittel (3, 3') voneinander elektrisch isoliert sind.

8. Übertragungs-Freileitungskabel nach einem der vorhergehenden Ansprüche, wobei das Kabel mehr als ein Zugelement (1) und mehr als ein Leitermittel (2) aufweist.

## Revendications

1. Câble de transmission aérien, comprenant un moyen conducteur (2), un élément de tension (1) auquel est donnée une tension, destiné à supporter le moyen conducteur (2) dans l'air, et un moyen de liaison (3, 3') destiné à relier le moyen conducteur (2) à l'élément de tension (1) de manière qu'ils soient espacés l'un de l'autre et qu'ils s'étendent parallèlement l'un à l'autre, caractérisé en ce que ledit moyen conducteur (2) est formé par retordage ou tressage de fils métalliques constitué d'un alliage d'aluminium qui présente une résistance thermique élevée ainsi qu'une conductibilité électrique non inférieure à 50%.

2. Câble de transmission aérien suivant la revendication 1, dans lequel le moyen conducteur (2) comprend des fils de fer ou d'un alliage d'un fer retordus ou tressés avec des fils de l'alliage d'aluminium.

3. Câble de transmission aérien suivant la revendication 1 ou 2, dans lequel l'élément de tension (1) est formé par retordage ou tressage de fils métalliques constitués d'au moins un métal choisi parmi le fer, le titane, l'aluminium et un alliage de ces métaux.

4. Câble de transmission aérien suivant l'une des revendications précédentes, dans lequel l'élément de tension (1) est formé par retordage ou tressage de fibres ou de fils organiques constitués d'au moins un matériau choisi parmi l'Aramide, le polyéthylène, le polyoxyméthylène, le polyarylate et la rayonne.

5. Câble de transmission aérien suivant l'une des revendications précédentes, dans lequel l'élément de tension (1) est formé par retordage ou tressage de fils constitués d'un composite d'au moins un matériau choisi parmi les matériaux organiques et les matériaux minéraux, le matériau minéral comprenant des fibres de carbone, des fibres de carbure de silicium, des fibres d'alumine et des fibres de verre, et au moins un matériau choisi parmi les métaux et les résines.

6. Câble de transmission aérien suivant la revendication 1, dans lequel l'élément de tension (1) comprend une fibre optique (7) afin de conférer au câble les fonctions de communication et/ou de détection de rupture.

7. Câble de transmission aérien suivant l'une des revendications précédentes, dans lequel l'élément de tension (1) et le moyen conducteur (2) sont électriquement isolés l'un de l'autre par ledit moyen de liaison (3, 3').

8. Câble de transmission aérien suivant l'une des revendications précédentes, dans lequel le câble comprend plus d'un élément de tension (1) et plus d'un moyen conducteur (2).
